# EUROPEAN PATENT SPECIFICATION

(11) **EP 4 040 161 B1**
(45) Date of publication and mention of the grant of the patent: **30.04.2025**
(21) Application number: 20872753.7
(22) Date of filing: 24.09.2020
(51) Int. Cl.: G01N 35/02, G01N 35/00, G01N 35/10

(54) **PIERCING CONDITION SELECTION METHOD**
VERFAHREN ZUR AUSWAHL VON DURCHSTECHBEDINGUNGEN
PROCÉDÉ DE SÉLECTION DE CONDITION DE PERÇAGE

(30) Priority: 30.09.2019 JP 2019180786
(43) Date of publication of application: 10.08.2022
(73) Proprietor: Sekisui Medical Co., Ltd., Tokyo 103-0027 (JP); Canon Medical Systems Corporation, Otawara-shi, Tochigi 324-8550 (JP)
(72) Inventor: KAWABE, Toshiki, Tokyo 103-0027 (JP); OGASAWARA, Kosuke, Tokyo 103-0027 (JP); IIJIMA, Yumi, Tokyo 103-0027 (JP); IWASAKI, Masaaki, Otawara-shi, Tochigi 324-8550 (JP)
(74) Representative: Schäfer, Matthias W.
(86) International application number: PCT/JP2020/035943
(87) International publication number: WO 2021/065651

(56) References cited:
- EP-A2- 1 890 156
- WO-A1-2016/084462
- JP-A- 2000 287 670
- JP-A- 2012 132 932
- JP-A- 2014 219 361
- JP-A- 2014 224 749
- JP-A- 2015 155 925
- JP-A- 2016 176 774
- JP-A- 2016 176 774
- JP-A- 2017 067 794

## Description

### TECHNICAL FIELD

The present invention relates to an automatic analysis apparatus capable of obtaining measurement information on various test items by causing a reaction between a sample (specimen) such as blood or urine and various reagents to measure a reaction process thereof, and a piercing condition selection method therefor.

### BACKGROUND ART

Conventionally, there have been various types of known automatic analysis apparatuses that can obtain measurement information on various test items by causing a reaction between various reagents and biological samples such as blood and urine to measure a reaction process thereof, such as a blood coagulation analysis apparatus and an analysis apparatus using an immunoassay method. For example, a specimen as a biological sample is dispensed from a specimen vessel (blood sample tube) to a reaction vessel, and a reagent according to a test item is dispensed and mixed with the dispensed specimen to perform various measurements and analyzes.

In such an analysis apparatus, when a specimen is sucked from a specimen vessel having a stopper (cap), CTS (Closed Tube Sampling: specimen dispensation from the specimen vessel having the stopper), which samples a specimen with the stopper attached, may be adopted. In this CTS, for example, a needle-shaped piercer having a hollow tube inside is used, and after the stopper is punctured by this piercer (stopper is pierced), a nozzle (specimen probe) is inserted into the specimen vessel through the inside of the piercer to suck the specimen (for example, see Patent Document 1).

In addition, in an automatic analysis apparatus adopting such a CTS method, despite the existence of stoppers of various materials and specimen vessels of various shapes, at present, the number of operation conditions of a piercing operation of puncturing a stopper of a specimen vessel by a piercer is fixed to one (for example, see Patent Document 2).

### CITATION LIST

### PATENT DOCUMENT

Patent Document 1: JP 2015-155925 A
Patent Document 2: WO/2016/084462
Patent document EP1890156A2 discloses a sample analyzer comprising a metal pipette configured to pierce the cap of a collection tube and a transmission type sensor configured to determine whether or not a cap is provided on the blood collection tube.
Patent document JP2016176774A discloses an automatic analyser wherein a piercer pierces the cap of a sample container and a probe passes through a hole formed by the piercer to suck the specimen from the sample container.

### SUMMARY OF THE INVENTION

### PROBLEM TO BE SOLVED BY THE INVENTION

However, considering that an influence of puncturing (piercing) on the specimen vessel differs depending on the shape of the specimen vessel and the material of the stopper, when the piercing operation condition is uniform, the specimen vessel may be damaged in some cases. In addition, since most of the stoppers of the specimen vessels to be pierced are made of rubber, depending on the piercing conditions (piercing operation conditions) such as a piercing speed, a piercing force, a piercer withdrawal speed after piercing, and a piercing distance of the piercer with respect to the specimen vessel, the rubber stopper may be pushed into the specimen vessel and cannot be pierced, rubber fragments may adhere to the inside of the piercer when the piercer is hollow, or an inner hole of the piercer may be blocked with the rubber stopper.

The invention has been made by paying attention to the above-mentioned problems, and an object of the invention to provide an automatic analysis apparatus capable of realizing a piercing operation under an appropriate piercing condition according to a type of a specimen vessel having a stopper, and a piercing condition selection method therefor.

### MEANS FOR SOLVING PROBLEM

To achieve the object, the invention provides for an automatic analysis apparatus according to claim 1.

In addition, the invention provides for a piercing condition selection method according to claim 7.

According to the automatic analysis apparatus and the piercing condition selection method therefor having the above configuration, since the piercing operation condition by the piercer for the specimen vessel having the stopper is set based on the rack identification information assigned to the specimen rack loaded with the same type of one or more specimen vessels having stoppers, it is possible to realize the piercing operation under an appropriate (optimal) piercing condition according to the type of the specimen vessel having the stopper. For this reason, it is possible to reduce the above-mentioned piercing problems in the past, prevent a long analysis time, and reduce the amount of specimen loss. Allowing setting of the piercing condition in such specimen rack units is particularly beneficial for a micro blood collection tube (which is a dedicated tube and aligns the height on the rack) to which identification information such as a specimen ID label cannot be affixed. That is, when the micro blood collection tube is used without using an adapter, etc., the optimum piercing condition can be set even if the specimen ID is not provided, as long as the information unique to the rack is added.

### EFFECT OF THE INVENTION

According to the invention, there is provided an automatic analysis apparatus capable of realizing a piercing operation (CTS operation) under an appropriate piercing condition according to a type of a specimen vessel having a stopper, and a piercing condition selection method therefor.

### BRIEF DESCRIPTION OF DRAWINGS

Fig. 1 is a schematic overall external view of an automatic analysis apparatus according to an embodiment of the invention;
Fig. 2 is a block diagram illustrating a schematic configuration of the automatic analysis apparatus of Fig. 1;
Fig. 3 is a block diagram illustrating a configuration for setting an appropriate piercing operation condition for each specimen rack;
Fig. 4 is a flowchart illustrating a flow of a method for setting an appropriate piercing operation condition for each specimen rack; and
Fig. 5 is a schematic view illustrating an example of a piercing operation when a piercer is hollow.

### MODE(S) FOR CARRYING OUT THE INVENTION

Hereinafter, an embodiment of the invention will be described with reference to the drawings.

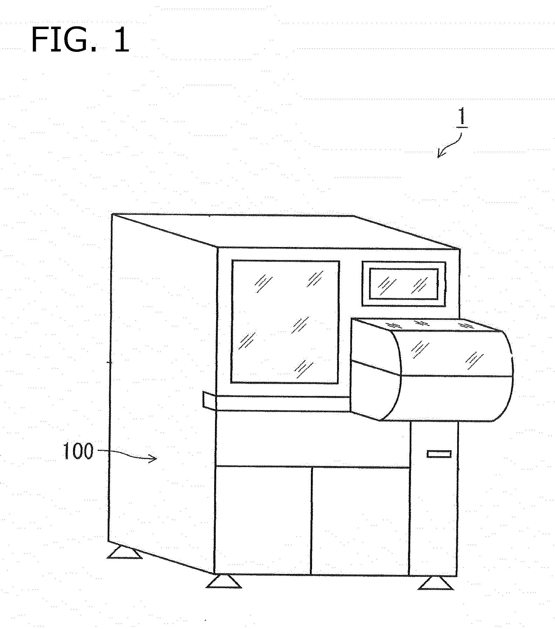

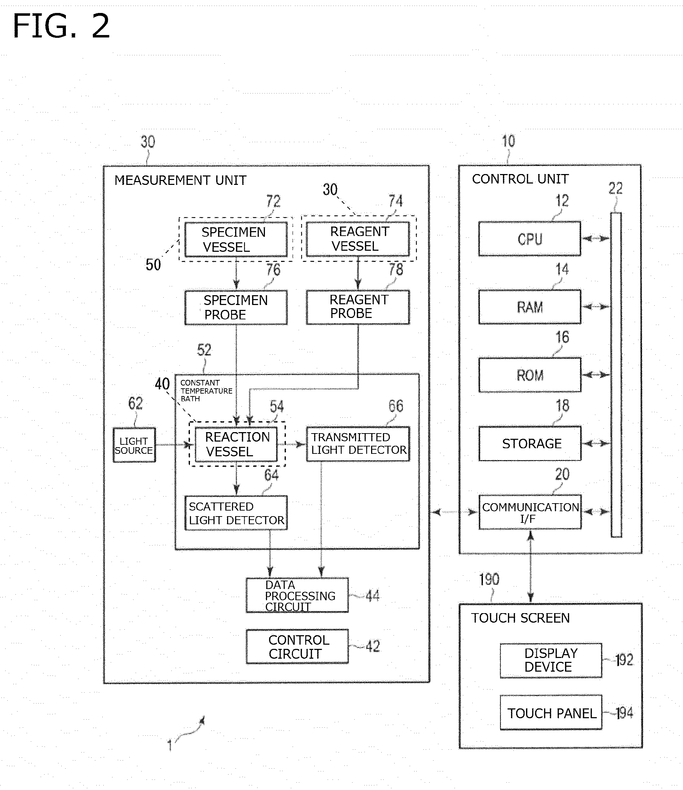

Fig. 1 is a schematic overall external view of an automatic analysis apparatus according to the present embodiment, and Fig. 2 is a block diagram illustrating a schematic configuration of the automatic analysis apparatus of Fig. 1. As illustrated in Fig. 2, the automatic analysis apparatus 1 of the present embodiment includes a specimen supply portion 50 for supplying a specimen, a reaction portion 40 for holding a reaction vessel 54 into which a specimen is dispensed, and a reagent supply portion 30 for supplying a reagent to the reaction vessel 54, and obtains measurement information on a predetermined test item by causing a reaction between a specimen and a reagent supplied from the reagent supply portion 30 to the reaction vessel 54 to measure a reaction process.

Specifically, an outer frame of the automatic analysis apparatus 1 of the present embodiment is formed by a housing 100, and the automatic analysis apparatus 1 is configured by forming a specimen processing space in an upper part of the housing 100 (see Fig. 1).

As clearly illustrated in Fig. 2, the automatic analysis apparatus 1 includes a control unit (controller) 10, a measurement unit 30, and a touch screen 190.

The control unit 10 controls the overall operation of the automatic analysis apparatus 1. The control unit 10 includes, for example, a personal computer (PC). The control unit 10 includes a Central Processing Unit (CPU) 12, a Random Access Memory (RAM) 14, a Read Only Memory (ROM) 16, a storage 18, and a communication interface (I/F) 20 connected to each other via a bus line 22. The CPU 12 performs various signal processing, etc. The RAM 14 functions as a main storage device of the CPU 12. As the RAM 14, for example, a Dynamic RAM (DRAM), a Static RAM (SRAM), etc. can be used. The ROM 16 records various boot programs, etc. For the storage 18, for example, a Hard Disk Drive (HDD), a Solid State Drive (SSD), etc. can be used. Various types of information such as programs and parameters used by the CPU 12 are recorded in the storage 18. Further, data acquired by the measurement unit 30 is recorded in the storage 18. The RAM 14 and the storage 18 are not limited thereto, and can be replaced with various storage devices. The control unit 10 communicates with an external device, for example, the measurement unit 30 and the touch screen 190 via the communication I/F 20.

The touch screen 190 includes a display device 192 and a touch panel 194. The display device 192 may include, for example, a liquid crystal display (LCD), an organic EL display, etc. The display device 192 displays various screens under the control of the control unit 10. This screen may include various screens such as an operation screen of the automatic analysis apparatus 1, a screen showing a measurement result, and a screen showing an analysis result. The touch panel 194 is provided on the display device 192. The touch panel 194 acquires an input from a user and transmits the obtained input information to the control unit 10.

The control unit 10 may be connected to other devices such as a printer, a handy code reader, and a host computer via the communication I/F 20.

The measurement unit 30 includes a control circuit 42, a data processing circuit 44, a constant temperature bath 52, the reaction vessel 54, a light source 62, a scattered light detector 64, a transmitted light detector 66, a specimen vessel 72, a reagent vessel 74, a specimen probe 76, and a reagent probe 78. In this case, the reaction vessel 54, the scattered light detector 64, and the transmitted light detector 66 are provided in the constant temperature bath 52. In addition, the specimen vessel 72 is a specimen vessel having a stopper, and a specimen rack loaded with the same type of one or more specimen vessels 72 having stoppers is arranged in the specimen supply portion 50.

The control circuit 42 controls an operation of each part of the measurement unit 30 based on a command from the control unit 10. Although not illustrated, the control circuit 42 is connected to the data processing circuit 44, the constant temperature bath 52, the light source 62, the scattered light detector 64, the transmitted light detector 66, the specimen probe 76, the reagent probe 78, etc., and controls an operation of each part.

The data processing circuit 44 is connected to the scattered light detector 64 and the transmitted light detector 66, and acquires a detection result from the scattered light detector 64 and the transmitted light detector 66. The data processing circuit 44 performs various processes on the acquired detection result and outputs a processing result. The processes performed by the data processing circuit 44 may include, for example, an A/D conversion process for converting a format of data output from the scattered light detector 64 and the transmitted light detector 66 into a format that can be processed by the control unit 10.

The control circuit 42 and the data processing circuit 44 may include, for example, a CPU, an Application Specific Integrated Circuit (ASIC), a Field Programmable Gate Array (FPGA), etc. Each of the control circuit 42 and the data processing circuit 44 may be configured by one integrated circuit, etc., or may be configured by combining a plurality of integrated circuits, etc. Further, the control circuit 42 and the data processing circuit 44 may include one integrated circuit, etc. The operation of the control circuit 42 and the data processing circuit 44 may be performed according to, for example, a program recorded in a storage device or a recording area in the circuit.

The specimen vessel 72 contains, for example, a specimen obtained from blood collected from a patient. The reagent vessel 74 contains various reagents used for measurement. Any number of specimen vessels 72 and reagent vessels 74 may be provided. Since there is usually a plurality of types of reagents used for analysis, there is generally a plurality of reagent vessels 74. The specimen probe 76 dispenses the specimen contained in the specimen vessel 72 into the reaction vessel 54 under the control of the control circuit 42. The reagent probe 78 dispenses the reagent contained in the reagent vessel 74 into the reaction vessel 54 under the control of the control circuit 42. Any number of specimen probes 76 and reagent probes 78 may be used.

The constant temperature bath 52 maintains the temperature of the reaction vessel 54 at a predetermined temperature under the control of the control circuit 42. In the reaction vessel 54, a mixed solution obtained by mixing the specimen dispensed by the specimen probe 76 and the reagent dispensed by the reagent probe 78 reacts. Note that any number of reaction vessels 54 may be used.

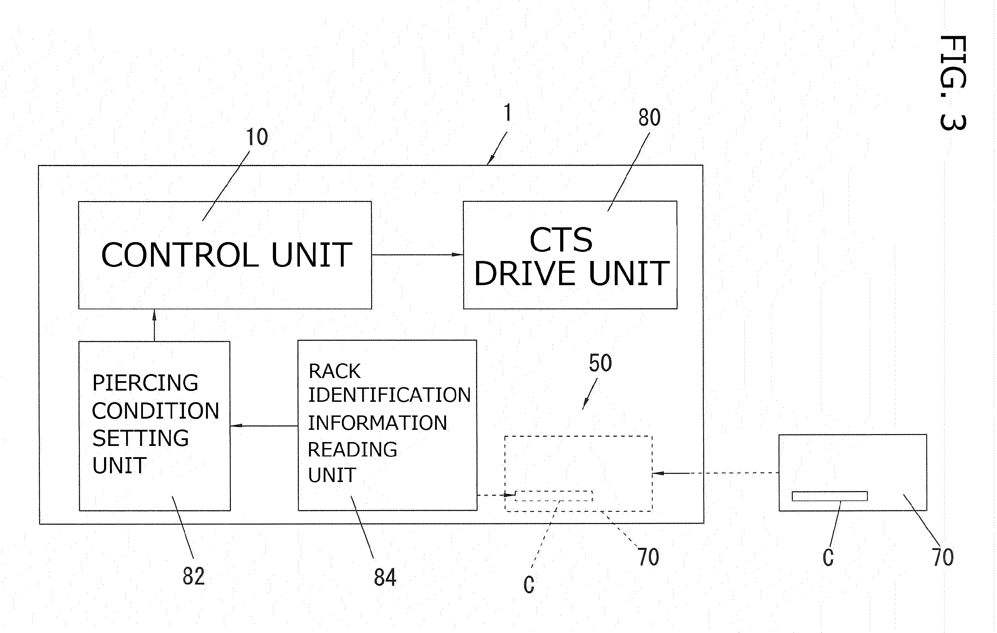

The light source 62 emits light having a predetermined wavelength under the control of the control circuit 42. The light source 62 may be configured to emit light having a different wavelength depending on the measurement condition. Therefore, the light source 62 may have a plurality of light source elements. The light emitted from the light source 62 is guided by, for example, an optical fiber, and is applied to the reaction vessel 54. The light applied to the reaction vessel 54 is partially scattered and partially transmitted depending on the reaction process state of the mixed solution in the reaction vessel 54. The scattered light detector 64 detects the light scattered in the reaction vessel 54, and detects, for example, the amount of the scattered light. The transmitted light detector 66 detects the light transmitted through the reaction vessel 54, and detects, for example, the amount of transmitted light. The data processing circuit 44 processes information on the amount of scattered light detected by the scattered light detector 64, and processes information on the amount of transmitted light detected by the transmitted light detector 66. Any one of the scattered light detector 64 and the transmitted light detector 66 may operate depending on the measurement condition. Therefore, the data processing circuit 44 may process any one of the information on the amount of scattered light detected by the scattered light detector 64 or the information on the amount of transmitted light detected by the transmitted light detector 66 according to the measurement condition. The data processing circuit 44 transmits processed data to the control unit 10. Note that even though the measurement unit 30 illustrated in Fig. 3 includes two light detectors, the scattered light detector 64 and the transmitted light detector 66, the measurement unit 30 may include any one of the light detectors.

The control unit 10 performs various calculations based on the data acquired from the measurement unit 30. These calculations include calculation of the reaction amount of the mixed solution, quantitative calculation of the substance amount or an activity value of a substance to be measured in a subject based on the reaction amount, etc. The data processing circuit 44 may perform some or all of these calculations.

Note that here, even though the case where a PC that controls the operation of the measurement unit 30 and a PC that performs data calculation and quantitative calculation are the same control unit 10 is illustrated, the PCs may be separate bodies. In other words, the PC that performs the data calculation and the quantitative calculation may exist as each.

Next, a description will be given of characteristic functional units of the automatic analysis apparatus 1 having the above configuration allowing setting of an appropriate piercing operation condition for each specimen rack, and a piercing condition selection method with reference to Figs. 3 to 5.

As illustrated in Fig. 3, the automatic analysis apparatus 1 of the present embodiment includes a rack identification information reading unit 84 that reads rack identification information C assigned to a specimen rack 70 loaded with the same type of one or more specimen vessels 72 having stoppers, a CTS drive unit 80 that executes a piercing operation of piercing the stopper of the specimen vessel 72 having the stopper by a piercer at a specimen suction position and sucks a specimen in the specimen vessel 72 having the stopper by a specimen suction nozzle included in the specimen probe 76 passing through a hole formed by the piercer, a piercing condition setting unit 82 that sets a piercing operation condition by the piercer for the specimen vessel 72 having the stopper loaded in the specimen rack 70 based on the rack identification information C read by the rack identification information reading unit 84, and the control unit 10 that controls an operation of the CTS drive unit 80 based on the piercing operation condition set by the piercing condition setting unit 82. The automatic analysis apparatus 1 can use a plurality of specimen racks 70, and can identify the type of the specimen vessel 72 mounted on the specimen rack 70 by identifying the rack identification information C. Note that the rack identification information C assigned to the specimen rack 70 may be a coded display (bar code or a 2D code, for example, a rack ID label or a rack number) printed on or affixed to the specimen rack 70, or may be formed by a shape peculiar to the specimen rack 70 (for example, a notch or a hole for ID is included in a bit) and/or a physical element used for reading the shape. As a physical element used for reading the shape, a magnet, etc. can be mentioned. In particular, when a large amount of information can be assigned to the 2D code, etc., it is possible to set a piercing operation condition for each position on the specimen rack 70.

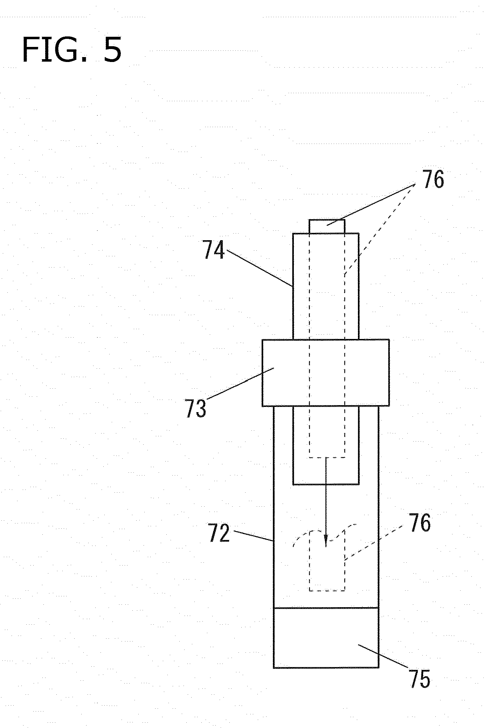

Here, Fig. 5 illustrates an example of a piercing operation using a tubular (hollow) piercer. As illustrated in the figure, a needle-shaped piercer 74, which is a hollow tube inside, is used, and after the stopper 73 closing an opening of the specimen vessel 72 is punctured (the stopper is pierced) by the piercer 74, the specimen suction nozzle (specimen probe) 76 is inserted into the specimen vessel 72 through the inside of the piercer 74 to suck a specimen 75. Note that the piercer does not have to be tubular in this way. When the piercer is not tubular, after the stopper is pierced by the piercer, the specimen suction nozzle sucks the specimen in the specimen vessel having the stopper through the hole of the stopper formed by the piercer without intervention of the piercer.

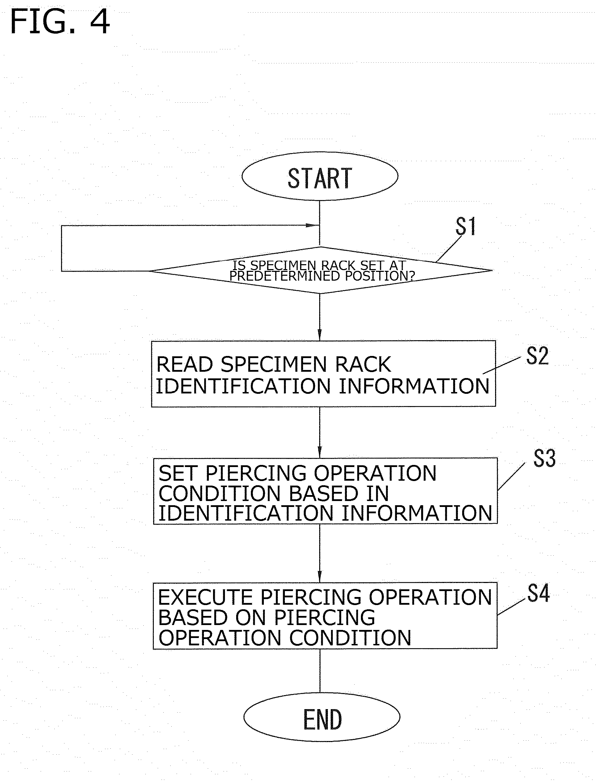

Next, a description will be given of a method of setting an appropriate piercing operation condition for each specimen rack 70 using the functional units illustrated in Fig. 3 described above with reference to Fig. **4****.**

First, in a state where the specimen rack 70 is set in the specimen supply portion 50 (step S1; also see Fig. 3), the rack identification information reading unit 84 reads the rack identification information C assigned to the specimen rack 70 (rack identification information reading step S2). Thereafter, the piercing condition setting unit 82 sets a piercing operation condition by the piercer for the specimen vessel 72 having the stopper loaded in the specimen rack 70 based on the rack identification information C read by the rack identification information reading unit 84 (piercing condition setting step S3). In this case, the piercing condition setting unit 82 sets the piercing operation condition (in rack units) based on an operation condition table in which the rack identification information C and the piercing operation condition are associated with each other and stored.

Note that examples of the piercing operation condition may include a lower limit of descent, a descent speed, a piercing force of the piercer, a descent speed pattern of the piercer during descent (two-step descent, etc.), inner and outer diameters of piercers (in the case of having a plurality of piercers), an upper limit of a stop position of the detection area for detecting the liquid level of the specimen with insertion of the suction nozzle (specimen probe) into the specimen vessel 72 having the stopper, the cumulative number of times of piercing, etc. Here, the cumulative number of times of piercing is useful when the stopper is damaged by a plurality of number of times of piercing by the piercer due to a characteristic of the stopper, and by cumulatively counting the number of times of piercing for each specimen ID, for example, a counting result may be fed back to the piercing condition setting unit 82 or the control unit 10.

Thereafter, when the specimen vessel 72 having the stopper is positioned at the specimen suction position, the control unit 10 controls an operation of the CTS drive unit 80 based on the piercing operation condition set by the piercing condition setting unit 82 (operation control step S4). In this way, at the specimen suction position, the stopper of the specimen vessel 72 having the stopper can be pierced by the piercer under an appropriate piercing operation condition according to the type of the specimen vessel 72 having the stopper, and then the specimen in the specimen vessel 72 having the stopper can be sucked by the specimen probe 76 passing through the hole formed by the piercer.

As described above, according to the present embodiment, since the piercing operation condition by the piercer for the specimen vessel 72 having the stopper can be set based on the rack identification information C assigned to the specimen rack 70 loaded with the same type of one or more specimen vessels 72 having stoppers, it is possible to realize the piercing operation under an appropriate (optimal) piercing condition according to the type of the specimen vessel 72 having the stopper. For this reason, it is possible to reduce the above-mentioned problems during piercing occurring in the past, prevent a long analysis time, and reduce the amount of specimen loss. In addition, allowing setting of the piercing condition in such specimen rack units is particularly beneficial for a micro blood collection tube (which is a dedicated tube and aligns the height on the rack) to which identification information such as a specimen ID label cannot be affixed. That is, when the micro blood collection tube is used without using an adapter, etc., the optimum piercing condition can be set even if the specimen ID is not provided, as long as the rack identification information C unique to the specimen rack 70 is added.

### EXPLANATIONS OF LETTERS OR NUMERALS

- 1: AUTOMATIC ANALYSIS APPARATUS
- 10: CONTROL UNIT (CONTROLLER)
- 50: SPECIMEN SUPPLY PORTION
- 70: SPECIMEN RACK
- 72: SPECIMEN VESSEL
- 80: CTS DRIVE UNIT
- 82: PIERCING CONDITION SETTING UNIT
- 84: RACK IDENTIFICATION INFORMATION READING UNIT
- C: RACK IDENTIFICATION INFORMATION

## Claims

1. An automatic analysis apparatus (1) for obtaining measurement information on a predetermined test item by causing a reaction between a specimen and a reagent to measure a reaction process thereof, the apparatus comprising:
a specimen supply portion (50), a specimen rack (70) loaded with the same type of one or more specimen vessels (72) having stoppers being arranged in the specimen supply portion (50);
a rack identification information reading unit (84) configured to read rack identification information assigned to the specimen rack (70);
a drive unit (80) configured to execute a piercing operation of piercing the stopper (73) of the specimen vessel (72) having the stopper (73) at a specimen suction position by a piercer (74), and configured to execute a sucking operation of sucking a specimen in the specimen vessel (72) having the stopper (73) by a specimen suction nozzle (76) passing through a hole formed by the piercer (74);
**characterised in that**
a piercing condition setting unit (82) configured to set a piercing operation condition selected from a number of piercing operation conditions by the piercer (74) for the specimen vessel (72) having the stopper (73) loaded in the specimen rack (70) based on the rack identification information (C) read by the rack identification information reading unit (84); and
a controller (10) configured to control the piercing operation of the drive unit (80) based on a piercing operation condition set by the piercing condition setting unit (82).

2. The automatic analysis apparatus (1) according to claim **1,** wherein the piercing operation condition includes at least one of a lower limit of descent, a descent speed, and a piercing force of the piercer, a descent speed pattern of the piercer during descent, inner and outer diameters of the piercer, an upper limit of a stop position of the detection area for detecting the liquid level of the specimen with insertion of the suction nozzle (76) into the specimen vessel (72) having the stopper (73), and a cumulative number of times of piercing.

3. The automatic analysis apparatus (1) according to claim 1 or 2, wherein the rack identification information (C) is a coded display printed on or affixed to the specimen rack (70).

4. The automatic analysis apparatus (1) according to claim 1 or 2, wherein the rack identification information (C) is formed by a shape peculiar to the specimen rack and/or a physical element for reading the shape.

5. The automatic analysis apparatus (1) according to any one of claims 1 to 4, wherein the piercing condition setting unit (82) sets a piercing operation condition based on an operation condition table, the rack identification information (C) and a piercing operation condition being associated with each other and stored in the operation condition table.

6. The automatic analysis apparatus (1) according to any one of claims 1 to 5, wherein the piercer (74) is a needle-shaped piercer which is a hollow tube inside.

7. A piercing condition selection method for an automatic analysis apparatus having the features of any one of claim 1 to 5 including a specimen supply portion (50), a specimen rack (70) loaded with the same type of one or more specimen vessels (72) having stoppers (73) being arranged in the specimen supply portion (50), and a drive unit (80) configured to execute a piercing operation of piercing the stopper (73) of the specimen vessel (72) having the stopper (73) at a specimen suction position by a piercer (74) and sucking a specimen in the specimen vessel (72) having the stopper (73) by a specimen suction nozzle (76) passing through a hole formed by the piercer (74), and obtaining measurement information on a predetermined test item by causing a reaction between a reagent and the specimen sucked by the specimen suction nozzle to measure a reaction process thereof, the method comprising:
a rack identification information reading step (S2) of reading rack identification information (C) assigned to the specimen rack (70);
a piercing condition setting step (S3) of setting a piercing operation condition by the piercer (74) for the specimen vessel (72) having the stopper (73) loaded in the specimen rack (70) based on rack identification information (C) read in the rack identification information reading step (S2); and
an operation control step of controlling the piercing operation of the drive unit (80) based on a piercing operation condition set in the piercing condition setting step (S3).

8. The piercing condition selection method according to claim 7, wherein the piercing operation condition includes at least one of a lower limit of descent, a descent speed, and a piercing force of the piercer, a descent speed pattern of the piercer (74) during descent, inner and outer diameters of the piercer (74), an upper limit of a stop position of the detection area for detecting the liquid level of the specimen with insertion of the suction nozzle (76) into the specimen vessel (72) having the stopper (73), and a cumulative number of times of piercing.

9. The piercing condition selection method according to claim 7 or 8, wherein by cumulatively counting the number of times of piercing for each specimen ID, a counting result is fed back to the piercing condition setting unit (82) or the control unit (10).

10. The piercing condition selection method according to claim 7, 8 or 9, wherein the rack identification information (C) is a coded display printed on or affixed to the specimen rack (70).

11. The piercing condition selection method according to any one of claim 7 to 10, wherein the rack identification information (C) is formed by a shape peculiar to the specimen rack (70) and/or a physical element for reading the shape.

12. The piercing condition selection method according to any one of claims 7 to 11, wherein the piercing condition setting step (S3) sets a piercing operation condition based on an operation condition table, the rack identification information (C) and a piercing operation condition being associated with each other and stored in the operation condition table.

## Patentansprüche

1. Automatische Analysevorrichtung (1) zum Erlangen von Messinformationen über einen vorgegebenen Prüfgegenstand durch Verursachen einer Reaktion zwischen einer Probe und einem Reagenz zur Messung eines Reaktionsprozesses dieser, wobei die Vorrichtung aufweist:
einen Probenzuführabschnitt (50), ein Probengestell (70), das mit einem oder mehreren Probengefäßen (72) vom gleichen Typ beladen ist, wobei in dem Probenzuführabschnitt (50) Stopfen angeordnet sind;
eine Leseeinheit für Rack-Identifikationsinformationen (84), konfiguriert zum Lesen von Rack-Identifikationsinformationen, die dem Probengestell (70) zugewiesen sind;
eine Antriebseinheit (80), konfiguriert zum Ausführen eines Einstechvorgangs beim Durchstechen des Stopfens (73) des Probengefäßes (72), wobei sich der Stopfen (73) in einer Probenansaugposition durch einen Einstecher (74) befindet, und zum Ausführen eines Saugvorgangs des Saugens einer Probe in das Probengefäß (72)durch eine Probensaugdüse (76), die durch ein von dem Einstecher (74) gebildetes Loch geführt wird, konfiguriert ist;
**gekennzeichnet durch**,
eine Einstechbedingung Einstelleinheit (82), die konfiguriert ist, um eine Einstechbedingung einzustellen, die aus einer Reihe von Einstechbedingungen durch den Einstecher (74) für das Probengefäß (72) ausgewählt ist, wobei der Stopper (73), basierend auf der von der Leseeinheit (84) eingelesenen Rack-Identifikationsinformationen (C), in das Probengestell (70) eingeladen ist; und
einen Regeler (10), der konfiguriert ist, um den Einstechvorgang der Antriebseinheit (80) basierend auf einer Einstechbedingung zu regeln, eingestellt von der Einstechbedinung Einstelleinheit (82).

2. Automatische Analysevorrichtung (1) nach Anspruch 1, wobei die Einstechbedingung zumindestens einschließt untere Absenksgrenze, Absenkgeschwindigkeit, Einstechkraft des Einstechers, Absenkgeschwindigkeitsmuster des Einstechers während des Absenkens, Innen- und Außendurchmesser des Einstechers, obere Grenze einer Anschlagposition des Erfassungsbereichs zum Erfassen des Flüssigkeitsspiegels der Probe mit Einsetzen der Saugdüse (76) in das Probengefäß (72) mit dem Stopfen (73) oder kumulative Anzahl von Durchstichen.

3. Automatische Analysevorrichtung (1) nach Anspruch 1 oder 2, wobei die Rack-Identifikationsinformation (C) eine codierte Anzeige ist, die auf das Probengestell (70) gedruckt oder daran angebracht ist.

4. Automatische Analysevorrichtung (1) nach Anspruch 1 oder 2, wobei die Rack-Identifikationsinformation (C) durch eine dem Probengestell eigentümliche Form und/oder ein physisches Element zum Ablesen der Form gebildet wird.

5. Automatische Analysevorrichtung (1) nach einem der Ansprüche 1 bis 4, wobei die Einstechbedingung Einstelleinheit (82) eine Einstechbedingung basierend auf einer Betriebsbedingungstabelle einstellt, wobei die Rack-Identifikationsinformation (C) und eine Einstechbedingung miteinander verknüpft und in der Betriebsbedingungstabelle gespeichert sind.

6. Automatische Analysevorrichtung (1) nach einem der Ansprüche 1 bis 5, wobei der Einstecher (74) ein nadelförmiger Einstecher ist, der ein hohles Rohr im Inneren ist.

7. Verfahren zur Auswahl von Einstechbedingungen für eine automatische Analysevorrichtung mit den Merkmalen eines der Ansprüche 1 bis 5, einschließlich eines Probenzuführabschnitts (50), eines Probengestells (70), das mit einem oder mehrerer Probengefäße (72) vom gleichen Typ beladen ist, mit Stopfen (73), die in dem Probenzuführteil (50) angeordnet sind, und einer Antriebseinheit (80), die so konfiguriert ist, dass sie einen Einstechvorgang zum Durchstechen des Stopfens (73) des Probengefäßes (72) mit dem Stopfen (73) durch einen Einstecher (74) in einer Probenansaugstellung und eine Probe in das Probengefäß (72) zu saugen ausführt, durch eine Probensaugdüse (76), die durch ein durch den Einstecher (74) gebildetes Loch des Stopfens (73) geführt wird, und erhalten von Messinformationen an einem vorgegebenen Prüfgegenstand durch Verursachen einer Reaktion zwischen einem Reagenz und der von der Probensaugdüse angesaugten Probe, um einen Reaktionsprozess davon zu messen, wobei das Verfahren folgendes aufweist:
einen Leseschritt für die Rack-Identifikationsinformationen(S2)des Lesens der Rack-Identifikationsinformationen (C), die dem Probengestell (70) zugewiesen sind;
einen Einstechbedingung Einstellschritt (S3) des Einstellens einer Einstechbedingung durch den Einstecher (74) für das Probengefäß (72), mit dem Stopfen (73) eingeladen in das Probengestell (70), basierend auf der Rck-Identifikationsinformation (C), die in dem Leseschritt der Rack-Identifikationsinformationen(S2) gelesen wurde; und
einen Betriebsregelschritt zur Regelung des Einstechvorgangs der Antriebseinheit (80) basierend auf einer Einstechbedingung, die in dem Einstechbedingung Einstellschritt (S3) festgelegt wurde.

8. Verfahren zur Auswahl von für Einstechbedingungen nach Anspruch 7, wobei die Einstechbedingung zumindest eine Untergrenze des Absenkens, eine Absenkgeschwindigkeit, eine Einstechkraft des Einstechers, ein Absenkgeschwindigkeitsmuster des Einstechers (74) während des Absenkens, Innen- und Außendurchmesser des Einstechers (74), eine obere Grenze einer Anschlagposition des Erfassungsbereichs zum Erfassen des Flüssigkeitsspiegels der Probe mit Einführen der Saugdüse (76) in das Probengefäß (72) mit dem Stopfen (73) oder kumulative Anzahl von Durchstichen einschließt.

9. Verfahren zur Auswahl von Einstechbedingungen nach Anspruch 7 oder 8, wobei durch kumulatives Zählen der Anzahl der Durchstrich für jede Proben-ID ein Zählergebnis an die Einstechbedingung Einstelleinheit (82) oder die Regeleinheit (10) zurückgemeldet wird.

10. Verfahren zur Auswahl der Einstechbedingung nach Anspruch 7, 8 oder 9, wobei die Rack-Identifikationsinformation (C) eine codierte Anzeige ist, die auf dem Probengestell (70) aufgedruckt oder angebracht ist.

11. Verfahren zur Auswahl der Einstechbedingung nach einem der Ansprüche 7 bis 10, wobei die Rack-Identifikationsinformation (C) durch eine dem Probengestell (70) eigentümliche Form und/oder ein physisches Element zum Ablesen der Form gebildet wird.

12. Verfahren zur Auswahl der Einstechbedingung nach einem der Ansprüche 7 bis 11, wobei der Einstechbedingung Einstellschritt (S3) eine Einstechbedingung basierend auf einer Betriebsbedingungstabelle festlegt, wobei die Rack-Identifikationsinformation (C) und eine Einstechbedingung miteinander verknüpft und in der Betriebsbedingungstabelle gespeichert sind.

## Revendications

1. Dispositif d'analyse automatique (1) destiné à obtenir des informations de mesure relatives à un élément de test prédéterminé en provoquant une réaction entre un échantillon et un réactif pour mesurer un processus de réaction de celui-ci, l'appareil comprenant :
une portion d'alimentation en échantillons (50), un support d'échantillon (70) chargé avec le même type d'un ou plusieurs réceptacles d'échantillons (72) présentant des bouchons agencés dans la portion d'alimentation en échantillons (50) ;
une unité de lecture d'informations d'identification de support (84) configurée pour lire des informations d'identification de support attribuées au support d'échantillon (70) ;
une unité d'entraînement (80) configurée pour exécuter une opération de perçage destinée à percer le bouchon (73) du réceptacle d'échantillon (72) présentant le bouchon (73) au niveau d'une position d'aspiration d'échantillon par un perceur (74), et configurée pour exécuter une opération d'aspiration destinée à aspirer un échantillon dans le réceptacle d'échantillon (72) présentant le bouchon (73) par une buse d'aspiration d'échantillon (76) passant à travers un trou formé par le perceur (74) ;
**caractérisé en ce que**
une unité de réglage de condition de perçage (82) est configurée pour régler une condition d'opération de perçage choisie parmi un nombre de conditions d'opération de perçage par le perceur (74) pour le réceptacle d'échantillon (72) présentant le bouchon (73) chargé dans le support d'échantillon (70) sur la base des informations d'identification de support (C) lues par l'unité de lecture d'informations d'identification de support (84) ; et
un moyen de commande (10) est configuré pour commander l'opération de perçage de l'unité d'entraînement (80) sur la base d'une condition d'opération de perçage réglée par l'unité de réglage de condition de perçage (82).

2. Dispositif d'analyse automatique (1) selon la revendication 1, dans lequel la condition d'opération de perçage inclut au moins un élément parmi une limite inférieure de descente, une vitesse de descente et une force de perçage du perceur, un modèle de vitesse de descente du perceur pendant la descente, des diamètres intérieur et extérieur du perceur, une limite supérieure d'une position d'arrêt de la zone de détection pour détecter le niveau de liquide de l'échantillon avec une insertion de la buse d'aspiration (76) dans le réceptacle d'échantillon (72) présentant le bouchon (73), et un nombre cumulé de fois de perçage.

3. Dispositif d'analyse automatique (1) selon la revendication 1 ou 2, dans lequel les informations d'identification de support (C) sont un affichage codé imprimé ou fixé sur le support d'échantillon (70).

4. Dispositif d'analyse automatique (1) selon la revendication 1 ou 2, dans lequel les informations d'identification de support (C) sont formées par une forme propre au support d'échantillon et/ou un élément physique pour lire la forme.

5. Dispositif d'analyse automatique (1) selon l'une quelconque des revendications 1 à 4, dans lequel l'unité de réglage de condition de perçage (82) règle une condition d'opération de perçage sur la base d'une table de conditions d'opération, les informations d'identification de support (C) et une condition d'opération de perçage étant associées les unes aux autres et stockées dans la table de conditions d'opération.

6. Dispositif d'analyse automatique (1) selon l'une quelconque des revendications 1 à 5, dans lequel le perceur (74) est un perceur en forme d'aiguille qui est un tube creux à l'intérieur.

7. Procédé de sélection de conditions de perçage pour un dispositif d'analyse automatique présentant les caractéristiques selon l'une quelconque des revendications 1 à 5 incluant une portion d'alimentation en échantillons (50), un support d'échantillon (70) chargé avec le même type d'un ou plusieurs réceptacles d'échantillons (72) présentant des bouchons (73) agencés dans la portion d'alimentation en échantillons (50), et une unité d'entraînement (80) configurée pour exécuter une opération de perçage destinée à percer le bouchon (73) du réceptacle d'échantillon (72) présentant le bouchon (73) au niveau d'une position d'aspiration d'échantillon par un perceur (74) et aspirer un échantillon dans le réceptacle d'échantillon (72) présentant le bouchon (73) par une buse d'aspiration d'échantillon (76) passant à travers un trou formé par le perceur (74), et obtenir des informations de mesure relatives à un élément de test prédéterminé en provoquant une réaction entre un réactif et l'échantillon aspiré par la buse d'aspiration d'échantillon pour mesurer un processus de réaction de celui-ci, le procédé comprenant :
une étape de lecture d'informations d'identification de support (S2) destinée à lire des informations d'identification de support (C) attribuées au support d'échantillon (70) ;
une étape de réglage de condition de perçage (S3) destinée à régler une condition d'opération de perçage par le perceur (74) pour le réceptacle d'échantillon (72) présentant le bouchon (73) chargé dans le support d'échantillon (70) sur la base des informations d'identification de support (C) lues dans l'étape de lecture d'informations d'identification de support (S2) ; et
une étape de commande d'opération destinée à commander l'opération de perçage de l'unité d'entraînement (80) sur la base d'une condition d'opération de perçage réglée dans l'étape de réglage de condition de perçage (S3).

8. Procédé de sélection de conditions de perçage selon la revendication 7, dans lequel la condition d'opération de perçage inclut au moins un élément parmi une limite inférieure de descente, une vitesse de descente et une force de perçage du perceur, un modèle de vitesse de descente du perceur (74) pendant la descente, des diamètres intérieur et extérieur du perceur (74), une limite supérieure d'une position d'arrêt de la zone de détection pour détecter le niveau de liquide de l'échantillon avec une insertion de la buse d'aspiration (76) dans le réceptacle d'échantillon (72) présentant le bouchon (73), et un nombre cumulé de fois de perçage.

9. Procédé de sélection de conditions de perçage selon la revendication 7 ou 8, dans lequel en comptant de manière cumulée le nombre de fois de perçage pour chaque ID d'échantillon, un résultat de comptage est retransmis à l'unité de réglage de condition de perçage (82) ou l'unité de commande (10).

10. Procédé de sélection de conditions de perçage selon la revendication 7, 8 ou 9, dans lequel les informations d'identification de support (C) sont un affichage codé imprimé ou fixé sur le support d'échantillon (70).

11. Procédé de sélection de conditions de perçage selon la revendication 7 à 10, dans lequel les informations d'identification de support (C) sont formées par une forme propre au support d'échantillon (70) et/ou un élément physique pour lire la forme.

12. Procédé de sélection de conditions de perçage selon l'une quelconque des revendications 7 à 11, dans lequel l'étape de réglage de condition de perçage (S3) règle une condition d'opération de perçage sur la base d'une table de conditions d'opération, les informations d'identification de support (C) et une condition d'opération de perçage étant associées les unes aux autres et stockées dans la table de conditions d'opération.
